# EUROPÄISCHE PATENTSCHRIFT

(11) **EP 1 161 638 B1**
(45) Veröffentlichungstag und Bekanntmachung des Hinweises auf die Patenterteilung: **26.05.2004**
(21) Anmeldenummer: 00912610.3
(22) Anmeldetag: 15.03.2000
(51) Int. Cl.: F16L 47/02

(54) **SCHLAUCHANSCHLUSS**
HOSE CONNECTING ELEMENT
RACCORD DE FLEXIBLE

(30) Priorität: 18.03.1999 DE 29905009 U
(43) Veröffentlichungstag der Anmeldung: 12.12.2001
(73) Patentinhaber: VERITAS GUMMIWERKE AG, 63571 Gelnhausen (DE)
(72) Erfinder: GEIMER, Joachim, D-63579 Freigericht-Altenmittlau (DE); EHRET, Martin, D-63571 Gelnhausen-Meerholz (DE); DESCH, Thorsten, D-63599 Biebergemünd-Wirtheim (DE); SEYLER, Andreas, D-63584 Gründau-Lieblos (DE)
(74) Vertreter: Grünecker, Kinkeldey, Stockmair & Schwanhäusser Anwaltssozietät
(86) Internationale Anmeldenummer: PCT/EP2000/002298
(87) Internationale Veröffentlichungsnummer: WO 2000/057098

(56) Entgegenhaltungen:
- EP-A- 0 337 037
- EP-A- 0 577 134
- DE-A- 4 229 717
- DE-C- 19 535 413
- FR-A- 2 737 548
- US-A- 4 417 753
- US-A- 5 443 098

## Beschreibung

Die vorliegende Erfindung bezieht sich auf einen Schlauchanschluss mit einem Anschlussstück aus Kunststoff, das an einem Behälter befestigt ist, und mit einem an dem Anschlussstück befestigten Schlauch, der über wenigstens einen Durchgang im Anschlussstück mit dem Behälter kommuniziert.

Derartige Schlauchverbindungen sind aus dem Stand der Technik bekannt. Insbesondere werden solche Schlauchanschlüsse für Tankentlüftungsleitungen verwendet. Hierbei wird ein Kunststoffrohr oder ein Schlauch aus Kunststoff auf einen Nippel des Anschlussstückes aufgeschlagen. Dieser Nippel, wie auch das Anschlussstück können aus z. B. Polyethylen hergestellt sein. Das Anschlussstück ist an den Kraftstofftank angeschweißt. Als problematisch kann es sich bei einem solchen Schlauchanschluss erweisen, dass es zu Undichtigkeiten zwischen dem Nippel, bzw. dem Anschlussstück und dem Schlauch oder Rohr kommt. Wenn Kunststoffmaterialien mit höherer Festigkeit, wie z. B. Polyamid, auf Kunststoffmaterialien mit niedriger Festigkeit, wie z. B. Polyethylen aufgeschlagen werden, neigen die Innenseiten zum Beulen und starkem Fließen. Dem Beulen kann teilweise durch ein Einschlagen von Metallhülsen in den Nippel entgegengewirkt werden. Um Undichtigkeiten durch Fließen zu vermeiden, ist jedoch zusätzlich ein elastomeres Dichtelement (z. B. ein O-Ring) auf dem Nippel notwendig. Man hat daher versucht Anschlussstück und Nippel aus unterschiedlichen Materialien herzustellen. Das Anschlussstück ist dabei aus Polyethylen gebildet und umschließt form- und materialschlüssig den Polyamidkern, der auch den Nippel aufweist. Der Nippel ist als sogenannter Tannenbaumnippel ausgebildet, auf welchen das Rohr oder der Schlauch in ähnlicher oder gleicher Festigkeit aufgeschossen wird. Die Herstellung und Montage eines solches Schlauchanschlusses ist jedoch kompliziert. Auch können die durch das Aufschlagen hervorgerufenen Dichtprobleme nicht restlos beseitigt werden.

Eine weitere Schlauchverbindung ist z. B. aus der DE 195 35 413 bekannt.

Aufgabe der Erfindung ist es, einen Schlauchanschluss bereitzustellen, der einerseits einfach herzustellen und zu montieren ist, und der andererseits Undichtigkeiten verringert bzw. verhindert.

Die Aufgabe wird erfindungsgemäß durch einen Schlauchanschluss in der eingangs genannten Art gelöst, bei dem der Schlauch mehrschichtig aufgebaut ist, wobei der Schlauch zumindest eine Verbindungsschicht aus Kunststoff aufweist, mit der er mit dem Kunststoff des Anschlussstücks zum Befestigen des Schlauches am Anschlussstück verschweißt ist und der Behälter aus mehrschichtigem Kunststoff hergestellt und das Anschlussstück mit dem Behälter verschweißt ist, wobei die dem Anschlussstück zugewandte Behälteraußenseite aus einem mit dem Anschlussstück verschweißbaren Kunststoff besteht.

Durch den mehrschichtigen Schlauch ist es nunmehr möglich, die Materialien derart auszuwählen, dass ein Verschweißen zwischen Schlauch und Anschlussstück möglich ist. Das Verschweißen gewährt eine größtmögliche Dichtheit zwischen Schlauch und Anschlussstück. Der mehrschichtige Behälter eignet sich, wenn Flüssigkeiten aufbewahrt werden sollen, die den Kunststoff der Außenschicht angreifen würden. Durch das Verschweißen von Anschlussstück und Behälter wird sich eine sehr große Dichtheit des Schlauchanschlusses verwirklichen, da sowohl zwischen Behälter und Anschlussstück, als auch zwischen Anschlussstück und Schlauch jeweils eine Verschweißung vorgesehen ist.

In einer vorteilhaften Weiterbildung der Erfindung kann das Anschlussstück schlauchseitig einen Aufnahmeabschnitt aufweisen, in den der Schlauch eingesteckt ist. Dadurch lässt sich auch ein Formschluss zwischen Schlauch und Anschlussstück realisieren. Zudem ermöglicht die Aufnahme ein einfaches Ausrichten des Schlauches gegenüber dem Anschlussstück, um die Verschweißung vornehmen zu können. Vor dem Verschweißen kann der Schlauch einfach in das Anschlussstück eingesteckt werden.

Ein Vorteil kann es dabei sein, wenn die Verbindungsschicht die Außenschicht ist. Dann kann die Verschweißung zwischen der Aufnahme und der Außenschicht des Schlauches erfolgen. Eine solche Verschweißung kann z. B. durch Ultraschall erfolgen.

Auch kann es sich als günstig erweisen, wenn das Anschlussstück schlauchseitig einen Rohrabschnitt aufweist, auf dem der Schlauch aufgesteckt ist. Auch hierdurch kann ein Formschluss zwischen dem Anschlussstück und dem Schlauch realisiert werden. Zudem lässt sich der Schlauchanschluss kompakt gestalten, da der Rohrabschnitt nicht an der Außenseite des Schlauches aufträgt.

In diesem Fall kann es sich als vorteilhaft erweisen, wenn die Verbindungsschicht die Innenseite des Schlauches ist. Dann kann die Verschweißung unmittelbar mit dem Rohrabschnitt erfolgen.

In einer vorteilhaften Weiterbildung der Erfindung können der Aufnahmeabschnitt und der Rohrabschnitt eine ringförmige Schlauchaufnahme bilden. In diese ringförmige Schlauchaufnahme kann der Schlauch vor dem Verschweißen eingesteckt werden. Dadurch lässt sich einerseits ein Formschluss realisieren, andererseits lässt sich je nach verwendetem Kunststoff verhindern, dass die Flüssigkeit im Inneren des Schlauches z. B. mit der Außenschicht in Berührung gelangt, wenn dies die Verbindungsschicht ist.

In diesem Zusammenhang kann es sich auch als günstig erweisen, wenn die lichte Weite der Schlauchaufnahme in etwa der Wanddicke des Schlauches entspricht. Dadurch lässt sich eine sichere Zentrierung des Schlauches vor dem Verschweißen gewährleisten.

Für das Verschweißen ist es insbesondere vorteilhaft, wenn die Außenschicht des Schlauches im wesentlichen aus dem gleichen Kunststoff wie das Anschlussstück besteht. Im wesentlichen aus dem gleichen Kunststoff bedeutet, aus der gleichen Gruppe von Kunststoffen. Eine solche Gruppe ist z. B. Polyethylen. Geringfügige Abweichungen der Mischungen der einzelnen Kunststoffe sollen davon miterfasst sein, sofern noch ein Verschweißen dieser Kunststoffe möglich ist.

Dabei kann es sich auch als vorteilhaft erweisen, wenn das Anschlussstück im wesentlichen aus dem gleichen Kunststoff wie der Behälter hergestellt ist. Auch in diesem Fall bedeutet im wesentlichen gleicher Kunststoff die gleiche Gruppe von Kunststoffen, wie z. B. Polyethylen. Geringfügige Abweichungen sind zulässig, sofern noch ein Verschweißen der Kunststoffe möglich ist.

In einer vorteilhaften Weiterbildung der Erfindung kann das Anschlussstück einen Flanschabschnitt aufweisen, der auf der Behälteraußenseite anliegt. Dadurch kann ein sicheres Abstützten des Anschlussstückes auf der Behälteraußenseite gewährleistet werden.

Auch kann das Anschlussstück einen Rohrfortsatz aufweisen, der zumindest abschnittsweise in eine Behälteröffnung hineinragt. Dadurch lässt sich das Anschlussstück vor dem Verschweißen auf einfache Weise in der Behälteröffnung vorzentrieren.

Um eine besonders stabile Lagerung des Anschlussstückes am Behälter zu gewährleisten, kann sich der Rohrfortsatz vollständig durch die Öffnung hindurch erstrecken. Ein Vorteil kann es dabei auch sein, wenn der Außendurchmesser des Rohrfortsatzes im wesentlichen gleich dem Innendurchmesser der Öffnung des Behälters ist und sowohl der Rohrfortsatz, als auch die Öffnung im wesentlichen zylindrisch sind.

In einer vorteilhaften Weiterbildung der Erfindung kann das Anschlussstück am Rand des Flanschabschnittes im wesentlichen vollständig umlaufend mit der Behälteraußenseite verschweißt sein. Dadurch lässt sich eine besonders stabile Verbindung zwischen Anschlussstück und Behälter realisieren.

Auch kann es sich als vorteilhaft erweisen, wenn der Durchgang einen zumindest abschätzweise sich in den Schlauch hineinerstreckenden ersten Durchgangsabschnitt und einen zumindest abschnittsweise sich in die Öffnung des Behälters hineinerstreckenden zweiten Durchgangsabschnitt aufweisen, wobei der erste und der zweite Durchgangsabschnitt sich im wesentlichen gerade erstrecken und einen Winkel zueinander einschließen. Dann läßt sich das Anschlußstück an unterschiedliche Einbaulagen anpassen.

Als besonders vorteilhaft kann sich ein Winkel von ca. 135° erweisen.

In einer vorteilhaften Weiterbildung der Erfindung ist der Behälter ein Kraftstofftank.

Ein Vorteil kann es auch sein, wenn der Behälter oder die Behälteraußenseite aus Polyethylen hergestellt ist. Dieser Kunststoff eignet sich besonders zum Verschweißen.

Dabei kann es sich als günstig erweisen, wenn auch das Anschlußstück aus Polyethylen besteht. Dann läßt sich eine besonders sichere Verbindung mit dem Polyethylen des Behälters oder der Behälteraußenseite sicherstellen.

Auch kann es vorteilhaft sein, wenn zumindest eine der Verbindungsschichten des Schlauches aus Polyethylen besteht. Auch dadurch kann eine besonders sichere Verschweißung mit dem Anschlußstück sichergestellt werden.

Zudem kann es sich als günstig erweisen, wenn der Schlauch aus zwei Schichten besteht, von denen zumindest eine aus Polyethylen besteht. Dann kann eine Beschichtung, z. B. die Innenschicht aus einem besonders widerstandsfähigen Kunststoff gebildet werden, um eine Beschädigung durch die Flüssigkeit zu verhindern, die in dem Schlauch transportiert wird.

Ferner kann es sich als vorteilhaft erweisen, wenn der Schlauch als ein im wesentlichen starres Rohr ausgebildet ist. Dann hat der Schlauch eine größere Steifigkeit, wodurch das Verlegen des Schlauches bzw. Rohres vereinfacht werden kann.

Nachfolgend wird die Erfindung anhand eines Ausführungsbeispieles näher erläutert.

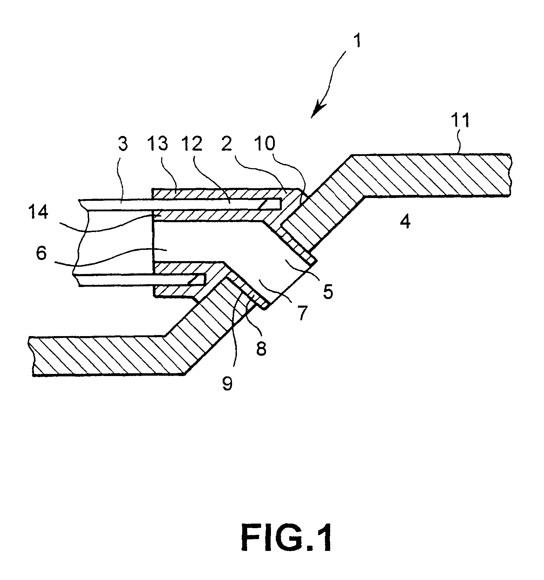

Die einzige Figur zeigt den erfindungsgemäßen Schlauchanschluß in einer Schnittansicht.

Der Schlauchanschluß 1 besteht aus einem Anschlußstück 2, einem Schlauch oder Rohr 3 und einem Behälter 4.

Das Anschlußstück 2 besteht aus Polyethylen und verfügt über einen Durchgang 5 mit einem dem Schlauch zugewandten ersten Durchgangsabschnitt 6 und einem dem Behälter 4 zugewandten zweiten Durchgangsabschnitt 7. Die beiden Durchgangsabschnitte 6 und 7 sind im wesentlichen gerade und zylindrisch, wobei ihre Symmetrieachsen einen Winkel von ca. 135° einschließen. Der zweite Durchgangsabschnitt 7 mündet in einen Rohrfortsatz 8 des Anschlußstückes 2. Der Rohrfortsatz 8 ist im wesentlichen zylindrisch und wird in einer Öffnung 9 des Behälters 4 aufgenommen, wobei der Außendurchmesser des Rohrfortsatzes 8 und der Innendurchmesser der Öffnung 9 im wesentlichen identisch sind und konzentrisch zueinander verlaufen. Der zweite Durchgangsabschnitt 7 verläuft konzentrisch zum Rohrfortsatz 8.

Das Anschlußstück 2 verfügt darüber hinaus auch noch über einen im wesentlichen ringförmigen Flanschabschnitt 10, aus dem heraus der Rohrfortsatz 8 mündet. Mit dem Flanschabschnitt 10 liegt das Anschlußstück 2 bündig auf einer Behälteraußenseite 11 auf. Am Umfang des Flanschabschnittes 10 ist das Anschlußstück 2 mit der Behälteraußenseite 11 verschweißt.

Um ein Verschweißen zu ermöglichen, ist der Behälter 4 ebenfalls aus mehrschichtigem Kunststoff ausgebildet, wobei die Behälteraußenseite durch eine Schicht aus Polyethylen gebildet wird.

Am schlauchseitigen Ende des Anschlußstückes 2 befindet sich eine im wesentlichen zylinderringförmige Schlauchaufnahme 12, in die der Schlauch 3 eingeschoben ist. Die zylinderringförmige Schlauchaufnahme 12 wird gebildet durch eine im wesentlichen zylindrische Schlauchaufnahme 13 und einen dazu konzentrisch angeordneten Rohrabschnitt 14, wobei die lichte Weite zwischen Schlauchaufnahme und Rohrabschnitt im wesentlichen der Wanddicke des Schlauche entspricht. Da die Schlauchaufnahme 12 an ihrem Ende schräg verläuft, ist der Schlauch 3 entsprechend schräg abgeschnitten.

Der Schlauch 3 besteht aus zwei Schichten, wobei die äußere Schicht aus Polyethylen gebildet wird. Die äußere Schicht bildet auch gleichzeitig die Verbindungsschicht, die mit dem Anschlußstück 2 verschweißt wird. Das Verschweißen erfolgt daher zwischen der Verbindungsschicht an der Außenseite des Schlauches und der Schlauchaufnahme 12. Als Schweißverfahren eignen sich sowohl für das Verbinden des Schlauches mit dem Anschlußstück, als auch des Anschlußstückes mit dem Behälter, Ultraschallschweißen, Mikrowellen oder Reibschweißen.

Nachfolgend wir die Wirkungsweise der Erfindung näher erläutert:

Zum Herstellen des Schlauchanschlusses wird zunächst das Anschlußstück 2 mit dem Rohrfortsatz 8 in die Öffnung 9 des Behälter 4 eingesteckt. Das Anschlußstück wird dabei so weit in die Öffnung 9 eingedrückt, bis der Flanschabschnitt 10 an der Behälteraußenseite anliegt. Dann kann der Flanschabschnitt 10 entlang seines Umfanges mit der Behälteraußenseite 11 verschweißt werden. Da sowohl die Behälteraußenseite 11, als auch das Anschlußstück 2 aus Polyethylen gebildet sind, kann eine solche Verschweißung problemlos erfolgen.

Dann wird der Schlauch 3 in die Schlauchaufnahme 12 eingesteckt, bis er die in der Figur dargestellte Stellung einnimmt. Anschließend erfolgt das Verschweißen, wobei die Verbindungsschicht des Schlauches an der Außenseite des Schlauches angeordnet ist, und mit der Schlauchaufnahme 12 verschweißt wird. Als Schweißverfahren kann hier ebenfalls Ultraschallschweißen, Mikrowellen oder Reibschweißen dienen.

Alternativ kann zunächst der Schlauch in die Schlauchaufnahme 12 eingesteckt und verschweißt werden und erst dann das Anschlußstück in den Behälter eingesteckt und mit ihm verschweißt werden.

Nach Fertigstellen des Schlauchanschlusses kann nunmehr Flüssigkeit durch den Durchgang 5 am Anschlußstück 2 aus dem Behälter 4 in den Schlauch 3 gefördert werden.

Durch den erfindungsgemäßen Schlauchanschluß ist es nunmehr möglich eine besonders sichere und zuverlässige Verbindung des Schlauches mit dem Behälter zu gewährleisten. Da die miteinander zu verbindenden Materialien aus dem selben Kunststoff bestehen, ist ein Verschweißen problemlos möglich. Durch den mehrschichtigen Schlauch kann die Innenseite des Schlauches derart gestaltet werden, daß sie auch durch aggressive Medien nicht angegriffen wird, wogegen die Außenseite aus einem besonders leicht zu verschweißenden Kunststoff hergestellt sein kann.

## Patentansprüche

1. Schlauchanschluss mit einem Anschlussstück (2) aus Kunststoff, und einem Behälter (4), an dem das Anschlussstück befestigt ist, und mit einem an dem Anschlussstück befestigten Schlauch (3), der über wenigstens einen Durchgang im Anschlussstück mit dem Behälter kommuniziert, **dadurch gekennzeichnet, dass** der Schlauch mehrschichtig aufgebaut ist, wobei der Schlauch zumindest eine Verbindungsschicht aus Kunststoff aufweist, mit der er mit dem Kunststoff des Anschlusssteckers zum Befestigen des Schlauches am Anschlussstück verschweißt ist und der Behälter aus mehrschichtigem Kunststoff hergestellt und das Anschlussstück mit dem Behälter verschweißt ist, wobei die dem Anschlussstück zugewandete Behälteraußenseite aus einem mit dem Anschlussstück verschweißbaren Kunststoff besteht.

2. Schlauchanschluss nach Anspruch 1, **dadurch gekennzeichnet, dass** das An-Schlussstück schlauchseitig einen Aufnahmeabschnitt aufweist, in den der Schlauch eingesteckt ist.

3. Schlauchanschluss nach Anspruch 1 oder 2, **dadurch gekennzeichnet, dass** die Verbindungsschicht die Außenschicht des Schlauches ist.

4. Schlauchanschluss nach einem der vorangegangenen Ansprüche, **dadurch gekennzeichnet, dass** das Anschlussstück schlauchseitig einen Rohrabschnitt (14) aufweist auf dem der Schlauch aufgesteckt ist.

5. Schlauchanschluss nach einem der vorangegangenen Ansprüche, **dadurch gekennzeichnet, dass** die Verbindungsschicht die Innenseite des Schlauches ist.

6. Schlauchanschluss nach einem der vorangegangenen Ansprüche, **dadurch gekennzeichnet, dass** der Aufnahmeabschnitt und der Rohrabschnitt eine ringförmige Schlauchaufnahme bilden.

7. Schlauchanschluss nach einem der vorangegangenen Ansprüche, **dadurch gekennzeichnet, dass** die lichte Weite der Schlauchaufnahme in etwa der Wanddicke des Schlauches entspricht.

8. Schlauchanschluss nach einem der vorangegangenen Ansprüche, **dadurch gekennzeichnet, dass** die Außenschicht des Schlauches im wesentlichen aus dem gleichen Kunststoff wie das Anschlussstück besteht.

9. Schlauchanschluss nach einem der vorangegangenen Ansprüche, **dadurch gekennzeichnet, dass** das Anschlussstück einen Flanschabschnitt aufweist, der auf der Behälteraußenseite anliegt.

10. Schlauchanschluss nach einem der vorangegangenen Ansprüche, **dadurch gekennzeichnet, dass** das Anschlussstück einen Rohrfortsatz (8) aufweist, der zumindest abschnittsweise in eine Behälteröffnung (9) hineinragt.

11. Schlauchanschluss nach einem der vorangegangenen Ansprüche, **dadurch gekennzeichnet, dass** das Anschlussstück am Rand des Flanschabschnittes im wesentlichen vollständig umlaufend mit der Behälteraußenseite (11) verschweißt ist.

12. Schlauchanschluss nach einem der vorangegangenen Ansprüche, **dadurch gekennzeichnet, dass** der Durchgang einer zumindest abschnittsweise sich in den Schlauch hineinerstreckenden ersten Durchgangsabschnitt in einen sich zumindest teilweise in die Öffnung des Behälters hineinerstreckenden zweiten Durchgangsabschnitt aufweist, wobei die ersten und zweiten Durchgangsabschnitte sich im wesentlichen gerade erstrecken und einen Winkel zueinander einschließen.

13. Schlauchanschluss nach einem der vorangegangenen Ansprüche, **dadurch gekennzeichnet, dass** der Winkel ca. 135° beträgt.

14. Schlauchanschluss nach einem der vorangegangenen Ansprüche, **dadurch gekennzeichnet, dass** der Behälter ein Kraftstofftank ist.

15. Schlauchanschluss nach einem der vorangegangenen Ansprüche, **dadurch gekennzeichnet, dass** der Behälter oder die Behälteraußenseite aus Polyethylen hergestellt ist.

16. Schlauchanschluss nach einem der vorangegangenen Ansprüche, **dadurch gekennzeichnet, dass** das Anschlussstück aus Polyethylen besteht.

17. Schlauchanschluss nach einem der vorangegangenen Ansprüche, **dadurch gekennzeichnet, dass** zumindest eine der Schichten des Schlauches aus Polyethylen besteht.

18. Schlauchanschluss nach einem der vorangegangenen Ansprüche, **dadurch gekennzeichnet, dass** der Schlauch aus zwei Schichten besteht, von denen zumindest eine aus Polyethylen besteht.

19. Schlauchanschluss nach einem der vorangegangenen Ansprüche, **dadurch gekennzeichnet, dass** der Schlauch als ein im wesentlichen starres Rohr ausgebildet ist.

## Claims

1. A hose connection having a connector piece (2) of plastics material and a container (4), to which the connector piece is attached, and having a hose (3) attached to the connector piece, which hose (3) communicates with the container via at least one passage in the connector piece, **characterised in that** the hose is of multilayer construction, wherein the hose has at least one connecting layer of plastics material, via which it is welded together with the plastics material of the connector plug to attach the hose to the connector piece and the container is made from multilayer plastics material and the connector piece is welded to the container, wherein the outside of the container facing the connector piece consists of a plastics material weldable to the connector piece.

2. A hose connection according to claim 1, **characterised in that** the connector piece has a receiving portion on the hose side, into which the hose is inserted.

3. A hose connection according to claim 1 or claim 2, **characterised in that** the connecting layer is the outer layer of the hose.

4. A hose connection according to one of the preceding claims, **characterised in that** the connector piece has a tubular portion (14) on the hose side, onto which the hose is pushed.

5. A hose connection according to one of the preceding claims, **characterised in that** the connecting layer is the inside of the hose.

6. A hose connection according to one of the preceding claims, **characterised in that** the receiving portion and the tubular portion form an annular hose receptacle.

7. A hose connection according to one of the preceding claims, **characterised in that** the internal width of the hose receptacle corresponds approximately to the thickness of the hose wall.

8. A hose connection according to one of the preceding claims, **characterised in that** the outer layer of the hose consists substantially of the same plastics material as the connector piece.

9. A hose connection according to one of the preceding claims, **characterised in that** the connector piece has a flange portion, which rests on the outside of the container.

10. A hose connection according to one of the preceding claims, **characterised in that** the connector piece has a tubular extension (8), which projects at least in part into a container opening (9).

11. A hose connection according to one of the preceding claims, **characterised in that,** at the edge of the flange portion, the connector piece is welded substantially all the way round to the outside (11) of the container.

12. A hose connection according to one of the preceding claims, **characterised in that** the passage has a first passage portion extending at least in part into the hose and a second passage portion extending at least in part into the opening of the container, wherein the first and second passage portions extend substantially straight and form an angle with one another.

13. A hose connection according to one of the preceding claims, **characterised in that** the angle is approx. 135°.

14. A hose connection according to one of the preceding claims, **characterised in that** the container is a fuel tank.

15. A hose connection according to one of the preceding claims, **characterised in that** the container or container outside is made of polyethylene.

16. A hose connection according to one of the preceding claims, **characterised in that** the connector piece consists of polyethylene.

17. A hose connection according to one of the preceding claims, **characterised in that** at least one of the layers of the hose consists of polyethylene.

18. A hose connection according to one of the preceding claims, **characterised in that** the hose consists of two layers, of which at least one is of polyethylene.

19. A hose connection according to one of the preceding claims, **characterised in that** the hose takes the form of a substantially rigid tube.

## Revendications

1. Raccord de tuyau comprenant une pièce de raccordement (2) en matière plastique, un récipient (4) auquel la pièce de raccordement est fixée, et un tuyau (3) qui est fixé à la pièce de raccordement et qui communique avec le récipient grâce à au moins un passage prévu dans la pièce de raccordement, **caractérisé en ce que** le tuyau a une structure multicouche, étant précisé qu'il comprend au moins une couche de liaison en matière plastique grâce à laquelle il est soudé à la matière plastique de l'élément de raccordement en vue de fixer le tuyau à la pièce de raccordement, que le récipient est fabriqué à partir d'une matière plastique multicouche et que la pièce de raccordement est soudée au récipient, et étant précisé que le côté extérieur du récipient tourné vers la pièce de raccordement se compose d'une matière plastique apte à être soudée à la pièce de raccordement.

2. Raccord de tuyau selon la revendication 1, **caractérisé en ce que** la pièce de raccordement comprend, côté tuyau, une section de logement dans laquelle le tuyau est introduit.

3. Raccord de tuyau selon la revendication 1 ou 2, **caractérisé en ce que** la couche de liaison est constituée par la couche extérieure du tuyau.

4. Raccord de tuyau selon l'une des revendications précédentes, **caractérisé en ce que** la pièce de raccordement comprend, côté tuyau, une section tubulaire (14) sur laquelle le tuyau est enfilé.

5. Raccord de tuyau selon l'une des revendications précédentes, **caractérisé en ce que** la couche de liaison est constituée par le côté intérieur du tuyau.

6. Raccord de tuyau selon l'une des revendications précédentes, **caractérisé en ce que** la section de logement et la section tubulaire forment un logement de tuyau annulaire.

7. Raccord de tuyau selon l'une des revendications précédentes, **caractérisé en ce que** la largeur du logement de tuyau correspond à peu près à l'épaisseur de paroi du tuyau.

8. Raccord de tuyau selon l'une des revendications précédentes, **caractérisé en ce que** la couche extérieure du tuyau se compose sensiblement de la même matière plastique que la pièce de raccordement.

9. Raccord de tuyau selon l'une des revendications précédentes, **caractérisé en ce que** la pièce de raccordement comporte une section formant collerette qui est appliquée sur le côté extérieur du récipient.

10. Raccord de tuyau selon l'une des revendications précédentes, **caractérisé en ce que** la pièce de raccordement comporte un prolongement tubulaire (8) qui pénètre au moins sur une section dans une ouverture de récipient (9).

11. Raccord de tuyau selon l'une des revendications précédentes, **caractérisé en ce que** la pièce de raccordement est soudée au côté extérieur (11) du récipient sur le bord de la section formant collerette, pratiquement sur tout le tour.

12. Raccord de tuyau selon l'une des revendications précédentes, **caractérisé en ce que** le passage comprend une première section qui pénètre au moins sur une section dans le tuyau et une seconde section qui pénètre au moins en partie dans l'ouverture du récipient, les première et seconde sections de passage étant sensiblement droites et définissant un angle l'une par rapport à l'autre.

13. Raccord de tuyau selon l'une des revendications précédentes, **caractérisé en ce que** l'angle est d'environ 135°.

14. Raccord de tuyau selon l'une des revendications précédentes, **caractérisé en ce que** le récipient est constitué par un réservoir de carburant.

15. Raccord de tuyau selon l'une des revendications précédentes, **caractérisé en ce que** le récipient ou le côté extérieur du récipient est fabriqué à partir de polyéthylène.

16. Raccord de tuyau selon l'une des revendications précédentes, **caractérisé en ce que** la pièce de raccordement est en polyéthylène.

17. Raccord de tuyau selon l'une des revendications précédentes, **caractérisé en ce que** l'une au moins des couches du tuyau est en polyéthylène.

18. Raccord de tuyau selon l'une des revendications précédentes, **caractérisé en ce que** le tuyau se compose de deux couches dont une au moins est en polyéthylène.

19. Raccord de tuyau selon l'une des revendications précédentes, **caractérisé en ce que** le tuyau est conçu comme un tube globalement rigide.
